# EUROPEAN PATENT APPLICATION

(11) **EP 4 184 150 A1**
(43) Date of publication of application: **24.05.2023**
(21) Application number: 21842050.3
(22) Date of filing: 17.06.2021
(51) Int. Cl.: G01N 21/88

(54) **IMAGING SYSTEM, INSPECTION SYSTEM, INFORMATION PROCESSING DEVICE, INFORMATION PROCESSING METHOD AND PROGRAM THEREOF, AND IMAGING CONTROL METHOD AND PROGRAM THEREOF**

(30) Priority: 15.07.2020 JP 2020121664
(71) Applicant: PANASONIC INTELLECTUAL PROPERTY MANAGEMENT CO., LTD., Chuo-ku Osaka-shi Osaka 540-6207 (JP)
(72) Inventor: ICHIKAWA, Takuto, Osaka-shi, Osaka 540-6207 (JP); OCHI, Masaaki, Osaka-shi, Osaka 540-6207 (JP); HARAGUCHI, Kazuma, Osaka-shi, Osaka 540-6207 (JP); SASAKI, Kenji, Osaka-shi, Osaka 540-6207 (JP)
(74) Representative: SSM Sandmair
(86) International application number: PCT/JP2021/023012
(87) International publication number: WO 2022/014247

(57) **Abstract**

An imaging system includes an imaging device, a lighting device, a control part, and an output part. The imaging device images an object. The lighting device irradiates the object with light. The control part controls the lighting device so as to irradiate the object with light from irradiation directions in which directions of irradiating the object with light are different from one another, and causes the imaging device to image the object in each of the mutually different irradiation directions. The output part outputs the plurality of captured images captured by the imaging device to image processing device 2 having a synthesis function of generating a composite image with reduced halation using the plurality of captured images.

## Description

### TECHNICAL FIELD

The present disclosure generally relates to an imaging system, an inspection system, an information processing device, an information processing method and a program thereof, and an imaging control method and a program thereof. More specifically, the present disclosure relates to an imaging system that images an object, an inspection system that inspects one or more articles included in an image obtained by imaging an object, and an information processing device used in an inspection system. The present disclosure relates to an information processing method used in an inspection system, a program for executing the information processing method, an imaging control method for imaging an object, and a program for executing the imaging control method.

### BACKGROUND ART

PTL 1 discloses an inspection device that performs preliminary positioning of a test piece with a line sensor camera. In the inspection device described in PTL 1, the line sensor camera is arranged such that the array direction of an optical sensors is parallel to the x-axis direction, and an image is captured while moving the xy stage in the y-axis direction to obtain a two-dimensional image.

The inspection device described in PTL 1 has a problem that halation occurs in an image depending on an inspection target (article), and it becomes difficult to recognize a position of the inspection target in the image.

### Citation List

### Patent Literature

PTL 1: Unexamined Japanese Patent Publication No. 2000-88764

### SUMMARY OF THE INVENTION

An object of the present disclosure is to provide an imaging system, an inspection system, an information processing device, an information processing method and a program thereof, and an imaging control method and a program thereof that facilitate recognition of a position of an article in an image.

An imaging system according to one aspect of the present disclosure includes an imaging device, a lighting device, a control part, and an output part. The imaging device images an object. The lighting device irradiates the object with light. The control part controls the lighting device so as to irradiate the object with light from mutually different irradiation directions, and causes the imaging device to image the object for each irradiation direction. The output part outputs a plurality of captured images captured by the imaging device to an image processing device. The image processing device has a synthesis function of generating a composite image with reduced halation using the plurality of captured images.

An inspection system according to another aspect of the present disclosure includes the imaging system, and the image processing device that executes inspection processing of inspecting one or more articles included in the composite image.

An information processing device according to another aspect of the present disclosure is used as the image processing device in the inspection system.

An information processing method according to another aspect of the present disclosure includes image acquisition processing and image synthesis processing. The image acquisition processing is of acquiring a plurality of captured images captured by an imaging device that images an object and having different light irradiation directions with respect to the object. The image synthesis processing is of generating a composite image with reduced halation using the plurality of captured images acquired by the image acquisition processing.

A program according to one aspect of the present disclosure causes one or more processors to execute the information processing method.

An imaging control method according to another aspect of the present disclosure includes control processing and output processing. The control processing is of controlling the lighting device so as to irradiate the object with light from mutually different irradiation directions, and causes the imaging device to image the object for each irradiation direction. The output processing is of outputting a plurality of captured images captured by the imaging device to an image processing device that has a synthesis function of generating a composite image with reduced halation using the plurality of captured images.

A program according to another aspect of the present disclosure causes one or more processors to execute the imaging control method.

The present disclosure has an advantage that the position of an article in an image can be easily recognized.

### BRIEF DESCRIPTION OF THE DRAWINGS

Fig. 1 is a block diagram illustrating an outline of an imaging system and an inspection system according to an exemplary embodiment of the present disclosure.
Fig. 2 is an external perspective view of the inspection system.
Fig. 3 is a plan view illustrating a stage camera and stage lighting used in the imaging system.
Fig. 4 is an outline view illustrating a positional relationship between the stage camera and a light source included in the stage lighting.
Fig. 5 is an explanatory view of an example of synthesis processing by the image processing device in the inspection system.
Fig. 6 is a flowchart showing an example of operation of the inspection system.
Fig. 7 is an outline view illustrating a positional relationship between a stage camera and a light source in an imaging system of a comparative example.
Fig. 8 is an explanatory view of a problem in the imaging system of the comparative example.

### DESCRIPTION OF EMBODIMENT

### (1) Outline

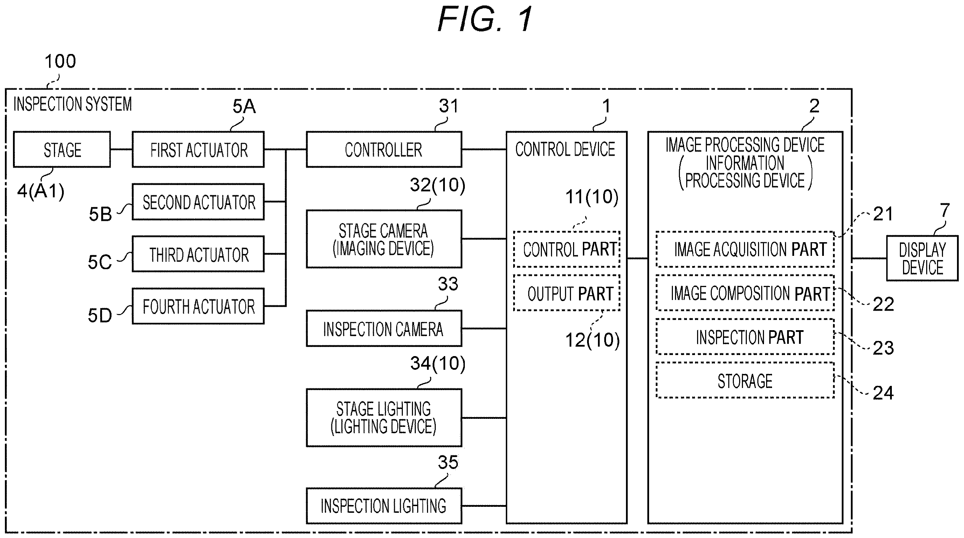

Fig. 1 is a block diagram illustrating an outline of imaging system 10 and inspection system 100 according to an exemplary embodiment of the present disclosure. Hereinafter, imaging system 10 and inspection system 100 according to the present exemplary embodiment will be described with reference to the drawings. However, the following exemplary embodiment is merely a part of various exemplary embodiments of the present disclosure. The exemplary embodiment described below can be variously changed according to a design and the like as long as the object of the present disclosure can be achieved. Each drawing described in the following exemplary embodiment is an outline view, and each ratio of the size and the thickness of each component in the drawing does not necessarily reflect the actual dimensional ratio.

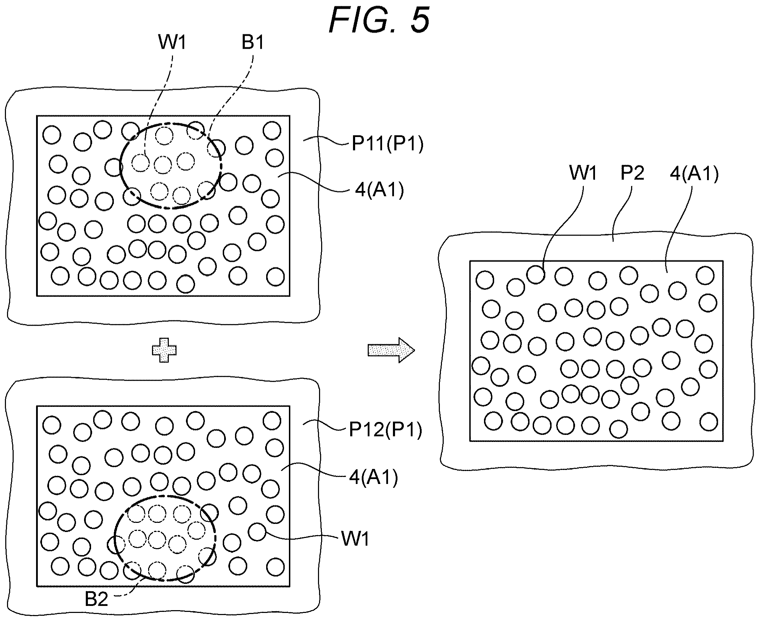

Imaging system 10 is a system for capturing captured image P1 (see Fig. 5) including object A1 used in inspection system 100. Inspection system 100 is a system for inspecting the appearance of article W1 (see Fig. 5) that is an inspection target. Article W1 may include a chip component such as a resistor, a capacitor, and an inductor, for example. Article W1 may include, for example, a circuit board, a sheet metal component such as a leaf spring, or a resin molded component such as a cover. In the present exemplary embodiment, article W1 is, for example, a washer. For example, inspection system 100 inspects a defect in appearance such as dirt, a scratch, a burr, or a chip on the outer surface of article W1. Inspection system 100 may be incorporated in a manufacturing line of article W1 or may perform appearance inspection outside the manufacturing line.

As illustrated in Fig. 1, imaging system 10 includes imaging device 32, lighting device 34, control part 11, and output part 12.

Imaging device 32 images object A1. In the present exemplary embodiment, imaging device 32 is stage camera 32 that images, as object A1, stage 4 on which one or more articles W1 that is an inspection target by inspection system 100 are placed. Hereinafter, unless otherwise specified, "imaging device" is referred to as "stage camera".

Lighting device 34 irradiates object A1 with light. In the present exemplary embodiment, lighting device 34 is stage lighting 34 that irradiates stage 4, which is object A1, with light. Hereinafter, unless otherwise specified, "lighting device" is referred to as "stage lighting".

Control part 11 controls stage lighting (lighting device) 34 so as to irradiate stage 4 (object A1) with light from mutually different irradiation directions, and causes stage camera (imaging device) 32 to image stage 4 for each irradiation direction.

Output part 12 outputs the plurality of captured images P1 captured by stage camera (imaging device) 32 to image processing device 2. Image processing device 2 has an image synthesis function of generating composite image P2 (see Fig. 5) with reduced halation using a plurality of captured images P1.

The "halation" mentioned in the present disclosure refers to a phenomenon in which light incident on stage camera (imaging device) 32 is too strong and a part that is whiter and unclear than other parts occurs in a part of captured image P1. Halation can occur when light incident on stage 4 (object A1) from stage lighting (lighting device) 34 is reflected at article W1, and the reflected light directly enters stage camera 32. That is, halation can occur mainly when article W1 has a mirror surface that reflects light.

Here, there is a problem that when image processing is executed to recognize the positions of one or more articles W1 in captured image P1 using captured image P1 with halation, it is difficult to recognize the position of article W1 at the location where halation has occurred. This is because the contour of article W1 becomes unclear at the part where halation occurs.

Therefore, in the present exemplary embodiment, by executing image synthesis processing using the plurality of (in the present exemplary embodiment, two) captured images P1 output from output part 12, image processing device 2 generates composite image P2 with reduced halation. Therefore, in composite image P2, the contour of one or more articles W1 becomes clear as compared with a case where halation is not reduced. Therefore, in the present exemplary embodiment, there is an advantage that the position of article W1 in an image (composite image P2) can be easily recognized.

### (2) Details

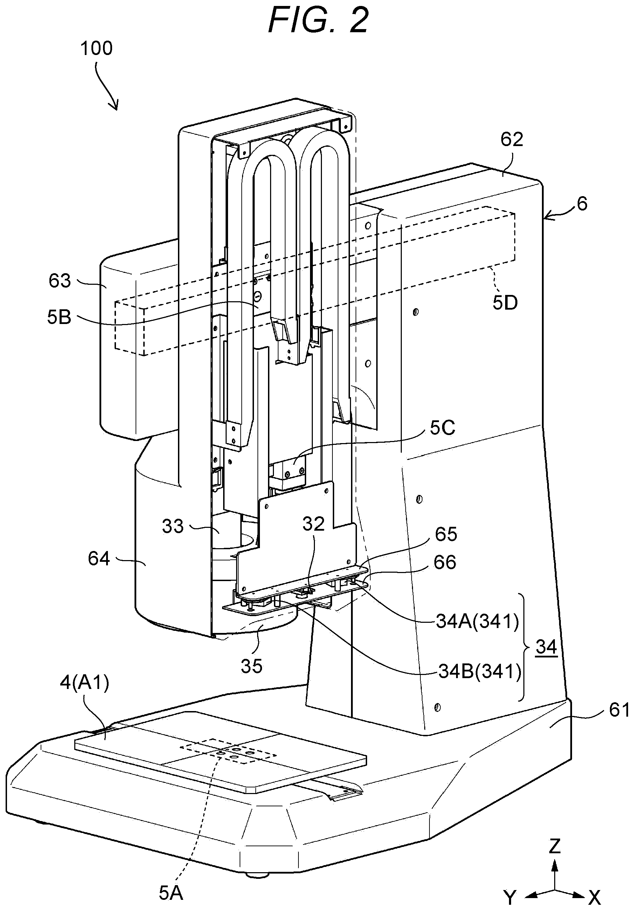

Hereinafter, imaging system 10 and inspection system 100 according to the present exemplary embodiment will be described in detail with reference to Figs. 1 and 2. Fig. 2 is an external perspective view of inspection system 100 according to the exemplary embodiment of the present disclosure. In the following description, as illustrated in Fig. 2, a length direction of stage 4 is defined as an X direction, a width direction of stage 4 is defined as a Y direction, and a thickness direction of stage 4 is defined as a Z direction. However, the definition of these directions is not intended to limit the use direction of inspection system 100. The arrows indicating the directions in the drawings are merely presented for the sake of description, and are not accompanied by entities.

As illustrated in Figs. 1 and 2, inspection system 100 includes control device 1, an image processing device 2, controller 31, stage camera (imaging device) 32, inspection camera 33, stage lighting (lighting device) 34, and inspection lighting 35. Inspection system 100 further includes stage 4 (object A1), first actuator 5A, second actuator 5B, third actuator 5C, fourth actuator 5D, and housing 6. Display device 7 is connected to inspection system 100.

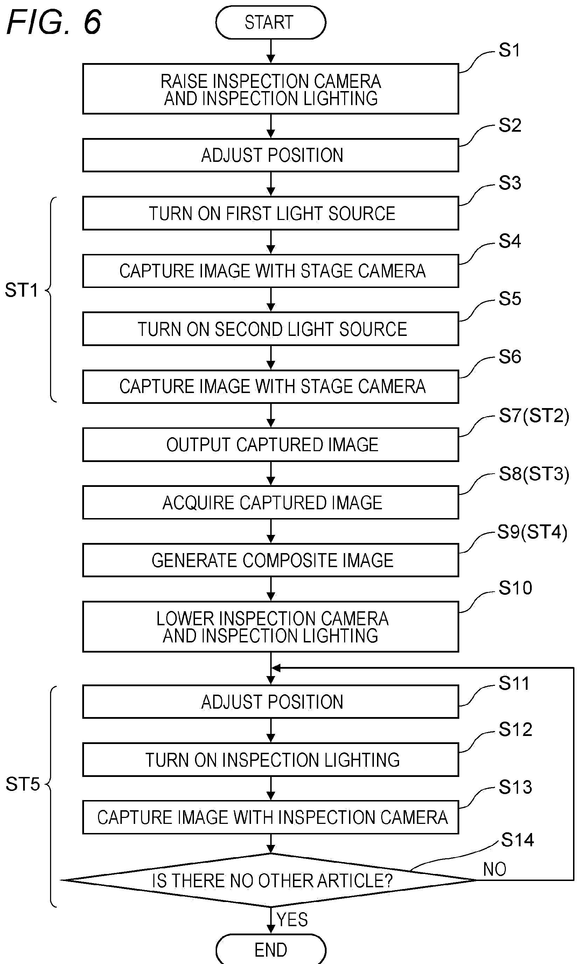

Imaging system 10 includes control part 11 and output part 12 included in control device 1, stage camera 32, and stage lighting 34. Imaging system 10 constitutes inspection system 100 together with image processing device 2. As described later, image processing device 2 generates composite image P2 using a plurality of captured images P1 output from imaging system 10. Image processing device 2 executes inspection processing ST5 (see Fig. 6) of inspecting one or more articles W 1 included in generated composite image P2. Fig. 6 is a flowchart showing an example of the operation of the inspection system according to the exemplary embodiment of the present disclosure.

As illustrated in Fig. 2, housing 6 includes base 61, body 62, arm 63, and case 64. In Fig. 2, a part of case 64 is not illustrated in order to illustrate the internal configuration of case 64.

Base 61 is placed on a construction surface such as a floor, and supports body 62, arm 63, and case 64. One surface (upper surface) of base 61 is mounted with stage 4 in a form of being movable in the X direction. Body 62 has a rectangular parallelepiped shape having a length in the Z direction, and is formed integrally with one end (rear end) in the Y direction of base 61. Arm 63 has a rectangular parallelepiped shape having a length in the Y direction, and is formed integrally with one end (upper end) in the Z direction of body 62. Case 64 has a tubular shape having a length in the Z direction, and is mounted to arm 63 in a form of being movable in the Y direction. Inspection camera 33 and inspection lighting 35 are accommodated inside case 64 in a form of being movable in the Z direction. Stage camera 32 and stage lighting 34 are fixed to an outer wall of case 64 in a form of being held between first mounting plate 65 and second mounting plate 66.

Stage 4 is a support base formed in a rectangular plate shape in plan view. Stage 4 is movable in the X direction by first actuator 5A. Fig. 5 is an explanatory view of an example of synthesis processing by the image processing device in the inspection system according to the exemplary embodiment of the present disclosure. As illustrated in Fig. 5, one or more articles W1 are placed on one surface (upper surface) of stage 4, for example, in a lattice shape. One or more articles W1 may be directly placed on stage 4, or a tray accommodating one or more articles W1 may be placed on stage 4.

First actuator 5A includes a first motor (not illustrated). The operation of the first motor is controlled by a drive circuit (not illustrated) of controller 31. First actuator 5A is movable in the X direction by the operation of the first motor. Stage 4 is mounted to first actuator 5A. Therefore, when first actuator 5A moves in the X direction, stage 4 can be moved in the X direction.

Second actuator 5B includes a second motor. The operation of the second motor (not illustrated) is controlled by the drive circuit of controller 31. Second actuator 5B is movable in the Z direction by the operation of the second motor. Inspection camera 33 is mounted to second actuator 5B. Therefore, when second actuator 5B moves in the Z direction, inspection camera 33 can be moved in the Z direction.

Third actuator 5C includes a third motor (not illustrated). The operation of the third motor is controlled by the drive circuit of controller 31. Third actuator 5C is movable in the Z direction by the operation of the third motor. Inspection lighting 35 is mounted to third actuator 5C. Therefore, when third actuator 5C moves in the Z direction, inspection lighting 35 can be moved in the Z direction.

Thus, inspection camera 33 and inspection lighting 35 can be moved in the Z direction independently of each other by second actuator 5B and third actuator 5C. Of course, both inspection camera 33 and inspection lighting 35 may be configured to be moved in the Z direction at the same time by one actuator.

Fourth actuator 5D includes a fourth motor (not illustrated). The operation of the fourth motor is controlled by the drive circuit of controller 31. Fourth actuator 5D is movable in the Y direction by the operation of the fourth motor. When fourth actuator 5D moves in the Y direction, case 64 mounted to fourth actuator 5D, that is, stage camera 32, inspection camera 33, stage lighting 34, and inspection lighting 35 can be moved in the Y direction.

Controller 31 controls each of first actuator 5A, second actuator 5B, third actuator 5C, and fourth actuator 5D in accordance with a control command output from control device 1. Controller 31 includes a drive circuit. The drive circuit controls on/off of the first motor included in first actuator 5A, on/off of the second motor included in second actuator 5B, on/off of the third motor included in third actuator 5C, and on/off of the fourth motor included in fourth actuator 5D.

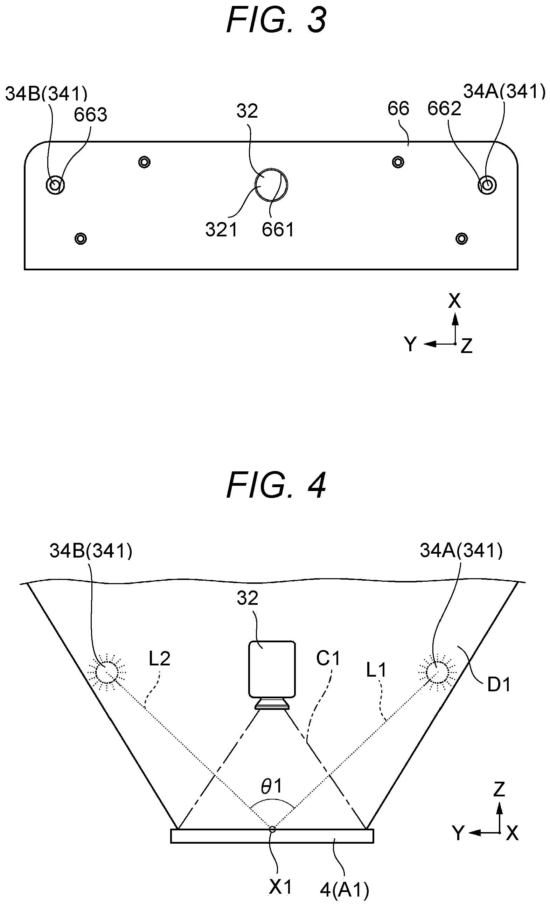

Stage camera 32 is, for example, an area camera. The area camera is a two-dimensional camera having an imaging element in which a plurality of light receiving elements (for example, photodiodes) are two-dimensionally arranged. The imaging element is, for example, a two-dimensional image sensor such as a charge coupled device (CCD) image sensor or a complementary metal oxide semiconductor (CMOS) image sensor. Fig. 3 is a plan view illustrating stage camera 32 and stage lighting 34 used in imaging system 10 according to the exemplary embodiment of the present disclosure. Stage camera 32 includes wide-angle lens 321. Therefore, stage camera 32 can image a wider area than that of inspection camera 33. In other words, the view angle of stage camera 32 is wider than the view angle of inspection camera 33. Imaging range C1 (see Fig. 4) of stage camera 32 is a range including the entire stage 4 on which one or more articles W1 are placed. Fig. 4 is an outline view illustrating the positional relationship between stage camera 32 according to the exemplary embodiment of the present disclosure and light source 341 included in stage lighting 34.

Inspection camera 33 is an area camera similarly to stage camera 32. In inspection camera 33, the imaging range of inspection camera 33 is a range including the entirety of one article W1 that is an inspection target or a part of one article W1 that is an inspection target. The imaging range of inspection camera 33 may include a part of another article W1 different from one article W1, which is an inspection target.

Stage lighting 34 is configured to irradiate stage 4, which is object A1, with light. In the present exemplary embodiment, stage lighting (lighting device) 34 includes a plurality of (here, two) light sources 341 that can be individually driven. Light source 341 is configured to include a circuit board on which a solid state light emitting element such as a light emitting diode, for example, is disposed. Each of the plurality of light sources 341 is disposed at a position where stage 4 can be irradiated with light. In the present exemplary embodiment, as illustrated in Fig. 3, the plurality of light sources 341 are arranged so as to be positioned on both sides across stage camera 32 in the Y direction. Therefore, the plurality of light sources 341 irradiate stage 4 (object A1) with light in different directions.

Specifically, as illustrated in Fig. 2, stage camera 32 and stage lighting 34 are fixed to case 64 of housing 6 in a form of being held between first mounting plate 65 and second mounting plate 66 having a length in the Y direction. Stage camera 32 is mounted to the center in the Y direction of first mounting plate 65. Two light sources 341 of stage lighting 34 are mounted to respect ends of both ends in the Y direction of first mounting plate 65. Hereinafter, of two light sources 341, light source 341 positioned on body 62 side of housing 6 is also referred to as "first light source 34A", and light source 341 of the other is also referred to as "second light source 34B".

Second mounting plate 66 is positioned nearer to base 61 of housing 6 than first mounting plate 65 in the Z direction. In other words, second mounting plate 66 is positioned below first mounting plate 65. Second mounting plate 66 is mounted to first mounting plate 65 by being screwed, for example. As illustrated in Fig. 3, second mounting plate 66 includes first hole 661, second hole 662, and third hole 663 each having a circular shape and penetrating in the Z direction.

First hole 661 is provided at the center in the Y direction of second mounting plate 66. First hole 661 exposes lens 321 of stage camera 32 with respect to stage 4. The diameter of lens 321 is substantially equal to the diameter of first hole 661.

Second hole 662 is provided at a first end (right end in Fig. 3) in the Y direction of second mounting plate 66. Second hole 662 exposes first light source 34A of stage lighting 34 with respect to stage 4. The diameter of first light source 34A is substantially equal to the diameter of second hole 662 and smaller than the diameter of first hole 661.

Third hole 663 is provided at a second end (left end in Fig. 3) in the Y direction of second mounting plate 66. Third hole 663 exposes second light source 34B of stage lighting 34 with respect to stage 4. The diameter of second light source 34B is substantially equal to the diameter of third hole 663 and smaller than the diameter of first hole 661.

That is, the diameter of light source 341 included in stage lighting (lighting device) 34 is smaller than the diameter of lens 321 included in stage camera (imaging device) 32. As an example, the diameter of lens 321 (diameter of first hole 661) is 11 to 12 mm, whereas the diameter of light source 341 (diameter of second hole 662 and diameter of third hole 663) is 3 to 4 mm.

As described above, the diameter of light source 341 is smaller than the diameter of lens 321, and light source 341 functions as a point light source. In a case where light source 341 functions as a point light source, a range in which halation occurs in captured image P1 when captured by stage camera 32 is narrower than a case where light source 341 functions as a line light source or a surface light source, which is preferable.

Stage lighting 34 is used when stage camera 32 images stage 4. Specifically, stage lighting 34 irradiates stage 4 with light in a state where the center of lens 321 of stage camera 32 and the center of stage 4 are aligned along the Z direction. Here, the plurality of light sources 341 included in stage lighting 34 are not simultaneously turned on at the time of imaging, but are turned on at different timings from one another. Therefore, the irradiation direction of light with respect to stage 4 is different for each light source 341 to be turned on.

For example, when first light source 34A is on, with stage 4 viewed from the Z direction and body 62 directed upward, the illuminance in the upper half region of stage 4 becomes larger than the illuminance in the lower half region of stage 4. On the other hand, when second light source 34B is on, with stage 4 viewed from the Z direction, the illuminance in the lower half region of stage 4 becomes larger than the illuminance in the upper half region of stage 4.

Here, when stage camera 32 images stage 4, the plurality of light sources 341 are arranged in defined region D1 as illustrated in Fig. 4. Fig. 4 is an outline view illustrating a state in which stage camera 32, stage lighting 34, and stage 4 are viewed from the X direction. Defined region D1 is a region where reflected light (specifically, reflected light from article W1 on stage 4) at stage 4 (object A1) enters stage camera (imaging device) 32. That is, all of the plurality of light sources 341 are arranged in a range where halation can occur in captured image P1 when imaged by stage camera 32. The distance (here, distance between first light source 34A and second light source 34B) between the plurality of light sources 341 is greater than or equal to the diameter of lens 321 included in stage camera (imaging device) 32.

When stage 4 is imaged by stage camera 32, the plurality of light sources 341 preferably have a positional relationship as illustrated in Fig. 4. That is, the plurality of light sources 341 are preferably arranged at intervals such that angle θ1 formed by first line segment L1 and second line segment L2 when viewed from the X direction becomes greater than or equal to 90 degrees. First line segment L1 is a line segment connecting center X1 of stage 4 and the center of first light source 34A. Second line segment L2 is a line segment connecting center X1 of stage 4 and the center of second light source 34B.

Thus, since the plurality of light sources 341 are arranged relatively apart, the reflected light caused by the light from each light source 341 is less likely to enter the same light receiving element (that is, pixel) in stage camera 32. Therefore, there is an advantage of easily avoiding halation from occurring in the same region in each of the plurality of captured images P1, and as a result, easily removing (reducing) halation in composite image P2. If halation occurs in the same region in each of the plurality of captured images P1, halation cannot be completely removed in composite image P2 even if this region is adopted from any of captured images P1. The distance between the plurality of light sources 341 is preferably appropriately set according to the resolution of stage camera 32.

Inspection lighting 35 is configured to irradiate an imaging range of inspection camera 33 with light. In the present exemplary embodiment, inspection lighting 35 is ring lighting having an annular light source. The ring lighting is configured to include a circuit board in which a plurality of solid state light emitting elements such as light emitting diodes are arranged on a circumference. Thus, use of the ring lighting as inspection lighting 35 enables the imaging range of inspection camera 33 to be irradiated with uniform light, and shadow of article W1 included in the imaging range is less likely to occur.

Control device 1 is a computer system mainly including one or more processors and a memory as hardware. In this computer system, various functions included in control device 1 are implemented by one or more processors executing a program recorded in the memory. The program may be recorded in advance in the memory of the computer system, may be provided through a telecommunication line, or may be provided by being recorded in a non-transitory recording medium such as an optical disk or a hard disk drive readable by a computer system.

Control device 1 includes control part 11 and output part 12.

By outputting a control command to each of controller 31, stage camera 32, inspection camera 33, stage lighting 34, and inspection lighting 35, control part 11 controls them. Control part 11 is an execution agent of control processing ST1 (see Fig. 6). Control part 11 controls stage lighting 34 so as to irradiate stage 4 with light from mutually different irradiation directions, and causes stage camera 32 to image stage 4 for each irradiation direction. For example, when stage camera 32 images stage 4, control part 11 causes stage camera 32 to image stage 4 a plurality of times, and controls stage lighting 34 such that the irradiation direction of light with respect to stage 4 is different every time stage camera 32 is caused to image stage 4.

Specifically, control part 11 causes stage camera 32 to image stage 4 twice. In the first imaging, control part 11 images stage 4 in a state where only first light source 34A of two light sources 341 included in stage lighting 34 is on. In the second imaging, control part 11 images stage 4 in a state where only second light source 34B of two light sources 341 included in stage lighting 34 is on. This gives the plurality of (here, two) captured images P1. Hereinafter, of two captured images P1, captured image P1 captured in a state where only first light source 34A is on is also referred to as "first captured image P11", and captured image P1 captured in a state where only second light source 34B is on is also referred to as "second captured image P12".

Fig. 5 illustrates an example of first captured image P 11 and second captured image P12. A region surrounded by dashed line B1 and a region surrounded by dashed line B2 in Fig. 5 each represents a region where halation occurs. Article W1 represented by a two-dot chain line in Fig. 5 has luminance larger than that of article W1 represented by a solid line, and has an unclear outline. As illustrated in Fig. 5, in first captured image P11, halation occurs in the upper half region of stage 4. In second captured image P12, halation occurs in the lower half region of stage 4.

Output part 12 outputs, to image processing device 2, the plurality of captured images P1 captured by stage camera 32. Output part 12 is an execution agent of output processing ST2 (see Fig. 6). In the present exemplary embodiment, upon ending the second imaging by stage camera 32, output part 12 outputs first captured image P11 and second captured image P12 to image processing device 2. Output part 12 may output first captured image P11 at a time point when the first imaging by stage camera 32 ends, and may output second captured image P12 at a time point when the second imaging by stage camera 32 ends.

Image processing device 2 is a computer system mainly including one or more processors and a memory as hardware. In this computer system, various functions included in image processing device 2 are implemented by one or more processors executing a program recorded in the memory. The program may be recorded in advance in the memory of the computer system, may be provided through a telecommunication line, or may be provided by being recorded in a non-transitory recording medium such as an optical disk or a hard disk drive readable by a computer system.

As illustrated in Fig. 1, image processing device 2 includes image acquisition part 21, image synthesis part 22, inspection part 23, and storage 24.

Image acquisition part 21 acquires the plurality of captured images P1 output from output part 12 of control device 1. Image acquisition part 21 is an execution agent of acquisition processing ST3 (see Fig. 6). In the present exemplary embodiment, image acquisition part 21 acquires first captured image P11 and second captured image P12 output from output part 12.

Image synthesis part 22 executes image synthesis processing of generating composite image P2 from which halation has been removed, using the plurality of captured images P1 acquired by image acquisition part 21. Image synthesis part 22 is an execution agent of image synthesis processing ST4 (see Fig. 6). In the present exemplary embodiment, image synthesis part 22 generates composite image P2 using first captured image P11 and second captured image P12 acquired by image acquisition part 21.

Specifically, image synthesis part 22 compares the luminance value of the pixel of first captured image P 11 with the luminance value of the pixel of corresponding second captured image P12, and adopts the pixel having the smaller luminance value as the pixel of composite image P2. Image synthesis part 22 executes the above processing on all pixels. This removes halation in composite image P2.

In the example illustrated in Fig. 5, halation occurs in a region surrounded by dashed line B1 of first captured image P 11, and the luminance is relatively high. On the other hand, halation does not occur in a corresponding region of second captured image P12, and the luminance is relatively small. Therefore, regarding this region, image synthesis part 22 adopts the pixel of second captured image P12 as the pixel of composite image P2. In the example illustrated in Fig. 5, halation occurs in a region surrounded by dashed line B2 of second captured image P12, and the luminance is relatively high. On the other hand, halation does not occur in a corresponding region of first captured image P11, and the luminance is relatively small. Therefore, regarding this region, image synthesis part 22 adopts the pixel of first captured image P11 as the pixel of composite image P2. Therefore, in composite image P2, halation is removed in both the region surrounded by dashed line B1 and the region surrounded by dashed line B2.

That is, the image synthesis function included in image processing device 2 compares the plurality of captured images P1 for each pixel, and generates composite image P2 in which pixels having a desired luminance value are synthesized. Then, in the image synthesis function, a target having a luminance value smaller than a threshold among the plurality of compared targets is adopted.

Inspection part 23 executes inspection processing ST5 of inspecting one or more articles W1 included in composite image P2 generated by image synthesis part 22. In the inspection processing, inspection part 23 recognizes the positions of one or more articles W1 in composite image P2 by executing appropriate image processing (for example, edge detection processing or the like) on composite image P2. Next, inspection part 23 images article W1 by inspection camera 33 in a state where light is irradiated from inspection lighting 35 for each recognized article W1. When inspection camera 33 images article W1, inspection part 23 adjusts the positions of stage 4, inspection camera 33, and inspection lighting 35 such that inspection camera 33 and inspection lighting 35 oppose article W1, which is an inspection target, in the Z direction based on composite image P2.

This gives an inspection image for each article W1. The inspection image becomes an enlarged image of article W1, which is an inspection target, as compared with composite image P2. By executing appropriate image processing for each inspection image, inspection part 23 inspects whether or not article W1 included in the inspection image has a defect and whether or not article W1 is a good item.

Storage 24 includes, for example, a hard disk drive (HDD). Storage 24 stores composite image P2 generated at image synthesis part 22 and an inspection image captured by inspection camera 33. Storage 24 stores inspection information used when inspection part 23 executes inspection processing. The inspection information includes, for example, an extraction threshold for binarizing a defective part included in article W1 and a determination threshold for determining whether or not article W1 is a good item.

Display device 7 is, for example, a liquid crystal display. In the present exemplary embodiment, display device 7 is connected to image processing device 2 via an external interface included in image processing device 2 of inspection system 100. Display device 7 is configured to display composite image P2 or an inspection image. Display device 7 may be a touch panel display.

### (3) Operation

Hereinafter, an example of the operation of inspection system 100 of the present exemplary embodiment will be described with reference to Fig. 6.

First, by controlling controller 31, control part 11 operates second actuator 5B and third actuator 5C to raise inspection camera 33 and inspection lighting 35 to a first raised position and the second raised position, respectively (step S1). The first raised position and the second raised position are positions at heights at which inspection camera 33 and inspection lighting 35 do not appear in stage 4 when stage camera 32 captures an image.

Next, by controlling controller 31, control part 11 operates first actuator 5A and fourth actuator 5D to move stage 4 and case 64, respectively. This adjusts the relative positions of stage camera 32 and stage 4 such that the center of lens 321 of stage camera 32 and the center of stage 4 are aligned along the Z direction (step S2). The order of processing S1 and S2 may be reversed.

Next, control part 11 starts imaging stage 4 by stage camera 32. Control part 11 turns on only first light source 34A of stage lighting 34 (step S3). Control part 11 causes stage camera 32 to image stage 4 (step S4), and to turn off first light source 34A after the imaging. Control part 11 turns on only second light source 34B of stage lighting 34 (step S5). Control part 11 causes stage camera 32 to image stage 4 (step S6), and to turn off second light source 34B. Steps S3 to S6 correspond to control processing ST1. In control processing ST1, the orders of steps S3 and S4 and steps S5 and S6 may be reversed.

Next, output part 12 outputs, to image processing device 2, the plurality of captured images P1 (here, first captured image P11 and second captured image P12) captured by stage camera 32 (step S7). Step S7 corresponds to output processing ST2.

In image processing device 2, image acquisition part 21 acquires the plurality of captured images P1 output from output part 12 (step S8). Step S8 corresponds to acquisition processing ST3. Then, using the plurality of captured images P1 acquired by image acquisition part 21, image synthesis part 22 generates composite image P2 from which halation has been removed (step S9). Step S9 corresponds to image synthesis processing ST4.

By controlling controller 31, control part 11 operates second actuator 5B and third actuator 5C to lower inspection camera 33 and inspection lighting 35 to a first lowered position and a second lowered position, respectively (step S10). The first lowered position is a position at a height at which inspection camera 33 can image article W1, which is an inspection target. The second lowered position is a position at a height at which inspection lighting 35 can irradiate article W1, which is an inspection target, with light.

Next, in image processing device 2, inspection part 23 starts inspection of article W1. By giving a control command to control part 11 and controlling controller 31, inspection part 23 operates first actuator 5A and fourth actuator 5D to move stage 4 and case 64, respectively. Thus adjusts the relative positions of inspection camera 33 and stage 4 such that the center of inspection camera 33 and the center of article W1, which is an inspection target, are aligned along the Z direction (step S11). In step S11, inspection part 23 recognizes the position of article W1, which is an inspection target, based on composite image P2.

Next, by giving a control command to control part 11, inspection part 23 turns on inspection lighting 35 (step S12). Then, by giving a control command to control part 11, inspection part 23 causes inspection camera 33 to image article W1, which is an inspection target (step S13), and to turn off inspection lighting 35. When there is another uninspected article W1 on stage 4 (No in step S14), inspection part 23 repeats steps S11 to S13. Then, when there is no other uninspected article W1 on stage 4 (Yes in step S14), inspection part 23 ends the operation. Steps S11 to S14 correspond to inspection processing ST5.

Although not illustrated in Fig. 6, by executing image processing on the inspection images of all articles W1 obtained in steps S11 to S14, inspection part 23 inspects whether or not all articles W1 have a defect and whether or not all articles W1 are food items.

### (4) Advantages

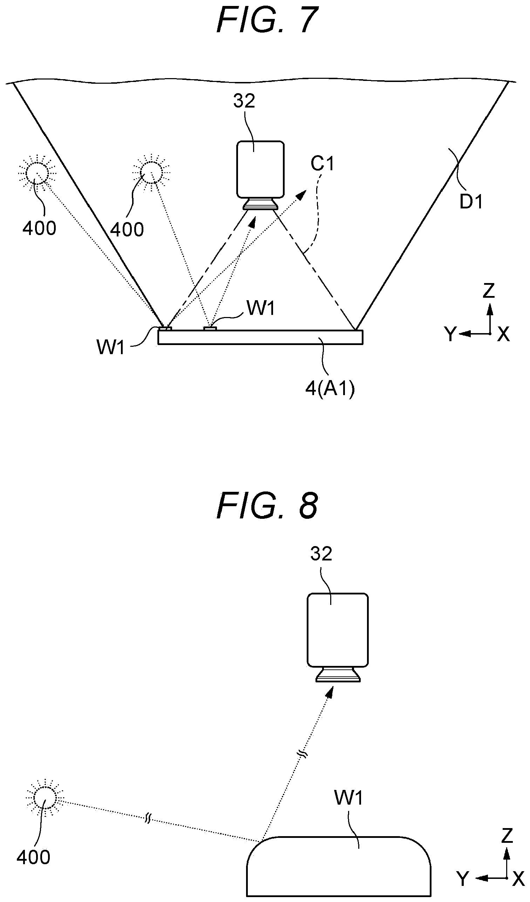

Hereinafter, advantages of imaging system 10 will be described with reference to Figs. 7 and 8 together with comparison with the imaging system of the comparative example. Fig. 7 is an outline view illustrating the positional relationship between stage camera 32 and light source 400 in the imaging system of the comparative example. Fig. 8 is an explanatory view of a problem in the imaging system of the above-described comparative example. The imaging system of the comparative example is different from imaging system 10 of the present exemplary embodiment in that the stage lighting includes only one light source 400 (see Fig. 7) and stage camera 32 images stage 4 (object A1) only once. Fig. 7 illustrates both a case where one light source 400 is disposed inside defined region D1 and a case where one light source 400 is disposed outside defined region D1.

In the imaging system of the comparative example, for example, as illustrated in Fig. 7, it is assumed that light source 400 is arranged in defined region D1. In this case, the light from light source 400 is reflected at article W1 on stage 4, and the reflected light directly enters stage camera 32, whereby halation occurs in captured image P1. In the case where light source 400 is arranged outside defined region D1, on the other hand, even if the light from light source 400 is reflected at article W1 on stage 4, the reflected light does not directly enter stage camera 32, and thus halation does not occur in captured image P1.

However, in the imaging system of the comparative example, in order to prevent halation from occurring in captured image P1, light source 400 needs to be arranged outside defined region D1. Therefore, in the imaging system of the comparative example, there is a problem of difficulty in imaging range C1 of stage camera 32 with a sufficient light quantity. In the imaging system of the comparative example, since light source 400 needs to be arranged outside defined region D1, there is a problem that the degree of freedom of layout of light source 400 (that is, stage lighting) is easily impaired.

In the imaging system of the comparative example, even if light source 400 is arranged outside defined region D1, depending on the shape of the surface of article W1 as illustrated in Fig. 8, the light from light source 400 is likely to be reflected by the curved surface of article W1, and reflected light directly enters stage camera 32. In this case, halation occurs in captured image P1.

On the other hand, in imaging system 10 of the present exemplary embodiment, the plurality of captured images P1 are captured in a state where the irradiation directions of light with respect to stage 4 (object A1) are different from one another while halation is allowed to occur in captured image P1. Therefore, in the present exemplary embodiment, even if halation occurs in each of the plurality of captured images P 1, the location where the halation occurs is different for each captured image P1. Therefore, it is possible to cause image processing device 2 to generate composite image P2 adopting a part where halation does not occur, by using the plurality of captured images P1 in which locations where halation can occur are different from one another.

As a result, in composite image P2, the contour of one or more articles W1 becomes clear as compared with the case where the halation is not removed. Therefore, in the present exemplary embodiment, there is an advantage that the position of article W1 in an image (composite image P2) can be easily recognized.

### (5) Modifications

The above exemplary embodiment is merely one of various exemplary embodiments of the present disclosure. The exemplary embodiment described above can be variously changed according to a design and the like as long as the object of the present disclosure can be achieved. Similar functions to those of image processing device 2 may be embodied by an information processing method, a (computer) program, a non-transitory recording medium recording a program, or the like. Similar functions to those of imaging system 10 may be embodied by an imaging control method, a (computer) program, a non-transitory recording medium recording a program, or the like.

An information processing method according to one aspect of the present disclosure includes image acquisition processing ST3 and image synthesis processing ST4. Image acquisition processing ST3 is processing of acquiring the plurality of captured images P1 captured by imaging device 32 that images object A1 and having mutually different light irradiation directions with respect to object A1. Image synthesis processing ST4 is processing of generating composite image P2 with reduced halation using the plurality of captured images P1 acquired by image acquisition processing ST3. A program according to one aspect of the present disclosure causes one or more processors to execute the above-described information processing method.

An imaging control method according to one aspect of the present disclosure includes control processing ST1 and output processing ST2. Control processing ST1 is processing of controlling lighting device 34 so as to irradiate object A1 with light from mutually different irradiation directions, and causing imaging device 32 to image object A1 for each mutually different irradiation direction. Output processing ST2 is processing of outputting the plurality of captured images P1 captured by imaging device 32 to image processing device 2 having an image synthesis function of generating composite image P2 with reduced halation using the plurality of captured images P1. A program according to one aspect of the present disclosure causes one or more processors to execute the above-described imaging control method.

Modifications of the exemplary embodiment described above will be presented below. The modifications to be described below can be applied in appropriate combination.

Inspection system 100 according to the present disclosure includes a computer system in control device 1, image processing device 2, and the like, for example. The computer system mainly includes a processor and a memory as hardware. The processor executes a program recorded in the memory of the computer system, thereby implementing a function as inspection system 100 in the present disclosure. The program may be recorded in advance in the memory of the computer system, may be provided through a telecommunication line, or may be provided by being recorded in a non-transitory recording medium such as a memory card, an optical disk, or a hard disk drive readable by a computer system. The processor of the computer system includes one or a plurality of electronic circuits including a semiconductor integrated circuit (IC) or a large scale integration (LSI). The integrated circuit such as an IC or an LSI mentioned here is called differently depending on a degree of integration, and includes integrated circuits called a system LSI, a very large scale integration (VLSI), or an ultra large scale integration (ULSI). Furthermore, a field-programmable gate array (FPGA) programmed after manufacture of LSI, and a logical device capable of reconfiguring a joint relationship in LSI or reconfiguring circuit partitions in LSI can also be used as processors. The plurality of electronic circuits may be integrated into one chip or may be provided in a distributed manner on a plurality of chips. The plurality of chips may be aggregated in one device or may be provided in a distributed manner in a plurality of devices. The computer system mentioned here includes a microcontroller having one or more processors and one or more memories. Therefore, the microcontroller also includes one or a plurality of electronic circuits including a semiconductor integrated circuit or a large scale integration.

It is not an essential configuration for inspection system 100 that the plurality of functions in inspection system 100 are integrated in one housing. The components of inspection system 100 may be provided in a distributed manner in a plurality of housings. At least some of the functions of inspection system 100 may be implemented by, for example, a server device, a cloud (cloud computing), and the like.

In the above-described exemplary embodiment, image synthesis part 22 generates composite image P2 by comparing the plurality of captured images P1 for each pixel, but the present invention is not limited to this aspect. For example, image synthesis part 22 may generate composite image P2 by comparing the plurality of captured images P1 for each region. That is, the image synthesis function included in image processing device 2 may compare the plurality of captured images P1 for each region and generate composite image P2 in which desired regions are synthesized.

As an example, in the example illustrated in Fig. 5, image synthesis part 22 compares the upper half region of first captured image P 11 with the upper half region of corresponding second captured image P12, and adopts, as a region of composite image P2, a region having a smaller luminance value (here, upper half region of second captured image P12). In the example illustrated in Fig. 5, image synthesis part 22 compares the lower half region of first captured image P11 with corresponding lower half region of second captured image P12, and adopts, as a region of composite image P2, a region having the smaller luminance value (here, lower half region of first captured image P11). This removes halation in composite image P2.

In the exemplary embodiment described above, image synthesis part 22 adopts the region having a luminance value smaller than a threshold among the comparison between the lower half region of first captured image P11 and corresponding lower half region of second captured image P12. However, the present invention is not limited to this aspect. For example, image synthesis part 22 may adopt a target having the largest luminance value among a plurality of compared targets. Depending on the size, shape, and color of article W1, or the color of the background (stage 4, tray, or the like), there can be a case where the contrast of composite image P2 is poor and the position of article W1 is difficult to recognize. Even in such case, by adopting a target having the largest luminance value, halation is generated at the edge of article W1 in composite image P2, whereby contrast of composite image P2 can be increased and the position of article W1 can be easily recognized. Image synthesis part 22 may calculate a representative value from luminance values of a plurality of targets and adopt the calculated representative value. The representative value may include, for example, an average value, a median value, and a mode value.

In the image synthesis function, it is also possible to generate composite image P2 by using a difference value (absolute value) between each pixel value of first captured image P11 and each pixel value of second captured image P12. In this aspect, a surface of article W1 in a stereoscopic specific direction can be easily extracted. The orientation of the surface can also be estimated by using an illuminance difference stereo method.

In the above-described exemplary embodiment, with the image synthesis function, each pixel value of first captured image P 11 is directly compared with each pixel value of second captured image P12 for each pixel or for each region without performing processing, but the present invention is not limited to this aspect. For example, the synthesis function may execute preprocessing for correcting each of the plurality of captured images P1 before comparing the plurality of captured images P1. Specifically, the synthesis function may have an aspect in which, after preprocessing (median filter) for the purpose of removing random noise or the like of each pixel value or preprocessing (sharpening filter) for the purpose of correcting defocus at the time of imaging is executed for each pixel, comparison is performed for each pixel or for each region. In this aspect, the luminance value of a comparison target becomes the luminance value after preprocessing is executed. As the preprocessing, binarization, an expansion algorithm, a contraction algorithm, a combination algorithm in which an expansion algorithm and a contraction algorithm are combined, a separation algorithm, or the like can be adopted.

In the above-described exemplary embodiment, as illustrated in Fig. 4, the plurality of light sources 341 are arranged line-symmetrically with respect to a straight line passing through the center of stage 4 when viewed from the X direction, but may be arranged asymmetrically. In the above-described exemplary embodiment, the plurality of light sources 341 are arranged on both sides across stage camera (imaging device) 32, but may be arranged on either one side.

In the above-described exemplary embodiment, the plurality of light sources 341 are arranged side by side in the Y direction, but the present invention is not limited to this aspect. For example, the plurality of light sources 341 may be arranged side by side in the X direction. For example, the plurality of light sources 341 may be arranged in an annular shape at intervals in the circumferential direction.

In the above-described exemplary embodiment, stage lighting (lighting device) 34 includes two light sources 341, but may include more light sources 341. In this case, control part 11 may cause stage camera (imaging device) 32 to image stage 4 (object A1) in a state where the plurality of light sources 341 are sequentially turned on independently. That is, control part 11 may cause stage camera 32 to image stage 4 as many times as the number of the plurality of light sources 341. In this case, output part 12 outputs the same number of captured images P1 as the number of the plurality of light sources 341 to image processing device 2.

Stage lighting (lighting device) 34 may include only one light source 341 as long as it has an aspect in which the light irradiation direction with respect to stage 4 (object A1) can be changed. In this case, for example, by controlling an actuator mounted to light source 341, control part 11 can change the irradiation direction of light from light source 341 by sliding or rotating light source 341 in the length direction (Y direction) of second mounting plate 66. In this case, control part 11 may cause stage camera (imaging device) 32 to image stage 4 (object A1) by sequentially changing the irradiation direction of the light from light source 341. That is, control part 11 is only required to cause stage camera 32 to image stage 4 as many times as the number of changes in the irradiation direction of light from light source 341. In this case, output part 12 outputs, to image processing device 2, the same number of captured images P1 as the number of changes in the irradiation direction of the light from light source 341.

In the above-described exemplary embodiment, image processing device 2 is included in inspection system 100, but image processing device 2 alone can be distributed in the market as information processing device 2. In other words, information processing device 2 is used as image processing device 2 in inspection system 100.

In the above-described exemplary embodiment, imaging system 10 and image processing device 2 are disposed in the same place by being provided in same housing 6, but may be disposed in different places from each other. In this case, output part 12 of imaging system 10 is only required to be configured to be able to communicate with image acquisition part 21 of image processing device 2 by wired communication or wireless communication.

In the exemplary embodiment and the modification described above, image processing device 2 has the image synthesis function of generating a composite image from which halation is removed using the plurality of captured images P1, but is not limited to removing halation by 100%. That is, an aspect may be adopted in which the degree of halation is reduced as compared with halation in individual captured images P1, and in this case, it can be said that image processing device 2 has an image synthesis function of generating a composite image with reduced halation using the plurality of captured images P1.

Control part 11 controls the lighting device so as to irradiate object A1 with light from mutually different irradiation directions, and causes the imaging device to image object A1 for each irradiation direction. However, for example, object A1 may be imaged a plurality of times for a specific irradiation direction (may be one or a plurality) among a plurality of mutually different irradiation directions. Image processing device 2 may generate a composite image by using a part or all of one or a plurality of captured images P1 obtained in each irradiation direction. As an example, by synthesizing a plurality of images by performing high dynamic range (HDR) synthesis or the like using a plurality of images captured with light irradiation time varied for each irradiation direction, it is possible to further reduce halation by synthesis in a plurality of irradiation directions while reducing halation for each irradiation direction. In this case, as one of preprocessing, correction is made from a plurality of images in the same irradiation direction.

### (Conclusions)

As described above, imaging system (10) according to the first aspect includes imaging device (32), lighting device (34), control part (11), and output part (12). Imaging device (32) images object (A1). Lighting device (34) irradiates object (A1) with light. Control part (11) controls lighting device (34) so as to irradiate object (A1) with light from mutually different irradiation directions, and causes imaging device (32) to image object (A1) in each irradiation direction. Output part (12) outputs a plurality of captured images (P1) captured by imaging device (32) to image processing device (2). Image processing device (2) has an image synthesis function of generating composite image (P2) with reduced halation using the plurality of captured images (P1).

According to this aspect, there is an advantage that the position of article (W1) in the image (composite image (P2)) is easily recognized.

In imaging system (10) according to the second aspect, in the first aspect, the image synthesis function compares a plurality of captured images (P1) for each pixel, and executes processing of generating composite image (P2) in which pixels having a desired luminance value are synthesized.

According to this aspect, there is an advantage that halation is easily reduced from the image (composite image (P2)).

In imaging system (10) according to the third aspect, in the first aspect, the image synthesis function executes processing of comparing a plurality of captured images (P1) for each region and generating composite image (P2) in which desired regions are synthesized.

According to this aspect, there is an advantage that halation is easily reduced from the image (composite image (P2)).

In imaging system (10) according to the fourth aspect, in the second or third aspect, the synthesis function executes preprocessing for correcting each of the plurality of captured images (P1) before comparing the plurality of captured images (P1).

According to this aspect, there is an advantage that halation is easily reduced from the image (composite image (P2)).

In imaging system (10) according to the fifth aspect, in any one of the second to fourth aspects, the image synthesis function adopts a target having a luminance value smaller than a threshold among a plurality of compared targets.

According to this aspect, there is an advantage that halation is easily reduced from the image (composite image (P2)).

In imaging system (10) according to the sixth aspect, in any one of the first to fifth aspects, lighting device (34) includes a plurality of light sources (341) that can be individually driven.

According to this aspect, there is an advantage that the irradiation direction of light with respect to object (A1) is easily changed only by individually driving the plurality of light sources (341).

In imaging system (10) according to the seventh aspect, in the sixth aspect, the plurality of light sources (341) are disposed in defined region (D1) where reflected light at object (A1) enters imaging device (32). A distance between the plurality of light sources (341) is greater than or equal to a diameter of lens (321) included in imaging device (32).

According to this aspect, there is an advantage of easily avoiding halation from occurring in the same region in each of the plurality of captured images (P1), and as a result, easily removing halation in composite image (P2).

In imaging system (10) according to the eighth aspect, in any one of the first to seventh aspects, a diameter of light source (341) included in lighting device (34) is less than or equal to a diameter of lens (321) included in imaging device (32).

According to this aspect, there is an advantage that light source (341) easily functions as a point light source, and a range in which halation occurs in captured image (P1) when captured by imaging device (32) is easily narrowed as compared with a case where light source (341) functions as a line light source or a surface light source.

In imaging system (10) according to the ninth aspect, in any one of the first to eighth aspects, stage (4) on which one or more articles (W1) are placed is imaged as object (A1).

According to this aspect, there is an advantage that halation is easily reduced from the image (composite image (P2)) including stage (4).

Inspection system (100) according to the tenth aspect includes imaging system (10) according to any of the first to ninth aspects and image processing device (2). Image processing device (2) executes inspection processing (ST5) of inspecting one or more articles (W1) included in composite image (P2).

According to this aspect, there is an advantage that one or more articles (W1) are easily recognized in inspection processing (ST5) by using the image (composite image (P2)) with reduced halation.

Information processing device (2) according to the eleventh aspect is used as image processing device (2) in inspection system (100) of the tenth aspect.

According to this aspect, there is an advantage that the position of article (W1) in the image (composite image (P2)) is easily recognized.

Information processing method according to the twelfth aspect includes image acquisition processing (ST3) and image synthesis processing (ST4). Image acquisition processing (ST3) is processing of acquiring a plurality of captured images (P1) captured by imaging device (32) that images object (A1) and having mutually different light irradiation directions with respect to object (A1). Image synthesis processing (ST4) is processing of generating composite image (P2) with reduced halation using the plurality of captured images (P1) acquired by image acquisition processing (ST3).

According to this aspect, there is an advantage that the position of article (W1) in the image (composite image (P2)) is easily recognized.

A program according to the thirteenth aspect causes one or more processors to execute the information processing method of the twelfth aspect.

According to this aspect, there is an advantage that the position of article (W1) in the image (composite image (P2)) is easily recognized.

An imaging control method according to the fourteenth aspect includes control processing (ST1) and output processing (ST2). Control processing (ST1) is processing of controlling lighting device (34) so as to irradiate object (A1) with light from mutually different irradiation directions, and causing imaging device (32) to image object (A1) in each irradiation direction. Output processing (ST2) is processing of outputting the plurality of captured images (P1) captured by imaging device (32) to image processing device (2) having an image synthesis function of generating composite image (P2) with reduced halation using the plurality of captured images (P1).

According to this aspect, there is an advantage that the position of article (W1) in the image (composite image (P2)) is easily recognized.

A program according to the fifteenth aspect causes one or more processors to execute the imaging control method according to the fourteenth aspect.

According to this aspect, there is an advantage that the position of article (W1) in the image (composite image (P2)) is easily recognized.

The configurations according to the second to ninth aspects are not essential configurations for imaging system (10), and can be omitted as appropriate.

### REFERENCE MARKS IN THE DRAWINGS

1: control device
2: image processing device (information processing device)
4: stage
5A: first actuator
5B: second actuator
5C: third actuator
5D: fourth actuator
6: housing
7: display device
10: imaging system
100: inspection system
11: control part
12: output part
21: image acquisition part
22: image synthesis part
23: inspection part
24: storage
31: controller
32: stage camera (imaging device)
321: lens
33: inspection camera
34: stage lighting (lighting device)
341: light source
34A: first light source
34B: second light source
35: inspection lighting
400: light source
61: base
62: body
63: arm
64: case
65: first mounting plate
66: second mounting plate
661: first hole
662: second hole
663: third hole
P1: captured image
A1: object
P2: composite image
D1: defined region
W1: article

## Claims

1. An imaging system comprising:
an imaging device that images an object;
a lighting device that irradiates the object with light;
a control part that causes the lighting device to irradiate the object with light from mutually different irradiation directions and causes the imaging device to image the object for each irradiation direction to generate a plurality of images; and
an output part that outputs the plurality of images generated by the imaging device to an image processing device,
wherein the image processing device has an image synthesis function of generating a composite image with reduced halation from the plurality of images.

2. The imaging system according to Claim 1, wherein the image synthesis function compares the plurality of images for each pixel as a compared target, and generates a composite image in which pixels having a desired luminance value are synthesized.

3. The imaging system according to Claim 1, wherein the image synthesis function compares the plurality of images for each region as a compared target, and generates a composite image in which desired regions are synthesized.

4. The imaging system according to Claim 2 or 3, wherein the image synthesis function includes preprocessing of correcting each of the plurality of images before comparing the plurality of images.

5. The imaging system according to any one of Claims 2 to 4, wherein the image synthesis function adopts the compared target when the compared target has a luminance value smaller than a threshold.

6. The imaging system according to any one of Claims 1 to 5, wherein the lighting device includes a plurality of light sources that can be individually driven.

7. The imaging system according to Claim 6, wherein the plurality of light sources are arranged in a defined region where reflected light at the object enters the imaging device, and a distance between the plurality of light sources is greater than or equal to a diameter of a lens included in the imaging device.

8. The imaging system according to any one of Claims 1 to 7, wherein a diameter of a light source included in the lighting device is less than or equal to a diameter of a lens included in the imaging device.

9. The imaging system according to any one of Claims 1 to 8, wherein the imaging device images, as the object, a stage on which one or more articles are placed.

10. An inspection system comprising:
the imaging system according to any one of Claims 1 to 9; and
the image processing device that executes inspection processing of inspecting one or more articles included in the composite image.

11. An information processing device used as the image processing device in the inspection system according to Claim 10.

12. An information processing method comprising:
image acquisition processing of acquiring a plurality of images generated by an imaging device that images an object and having mutually different light irradiation directions with respect to the object; and
image synthesis processing of generating a composite image with reduced halation using the plurality of images acquired by the image acquisition processing.

13. A program that causes one or more processors to execute the information processing method according to Claim 12.

14. An imaging control method comprising:
control processing of controlling a lighting device to irradiate an object with light from mutually different irradiation directions and causing an imaging device to image the object for each irradiation direction; and
output processing of outputting a plurality of images generated by the imaging device to an image processing device having an image synthesis function of generating a composite image with reduced halation using the plurality of images.

15. A program that causes one or more processors to execute the imaging control method according to Claim 14.
